Europäisches Patentamt

European Patent Office

Office européen des brevets

(11) Veröffentlichungsnummer: **0 407 867 A2**

## (12) EUROPÄISCHE PATENTANMELDUNG

(21) Anmeldenummer: 90112725.8

(22) Anmeldetag: 04.07.90

(51) Int. Cl.5: **C07F 7/04**, C08G 77/02

(30) Priorität: 12.07.89 DE 3922879

(43) Veröffentlichungstag der Anmeldung:
16.01.91 Patentblatt 91/03

(84) Benannte Vertragsstaaten:
AT BE CH DE DK ES FR GB IT LI LU NL SE

(71) Anmelder: Henkel Kommanditgesellschaft auf Aktien
Postfach 1100 Henkelstrasse 67
D-4000 Düsseldorf 1(DE)

(72) Erfinder: Härer, Jürgen, Dr.
Johannes-Hesse-Strasse 3
D-4000 Düsseldorf 13(DE)
Erfinder: Christophliemk, Peter, Dr.
Rudolf-Breitscheid-Strasse 61
D-4000 Düsseldorf 13(DE)
Erfinder: Kuhm, Peter, Dr.
Clarenbachweg 3
D-4010 Hilden(DE)
Erfinder: Krause, Melita
Elbruchstrasse 13
D-4000 Düsseldorf 13(DE)

(54) Verfahren zur Herstellung von Polykieselsäure-C6-22-Alkylestern.

(57) Die Erfindung betrifft ein Verfahren zur Herstellung von Polykieselsäure-$C_{6-22}$-alkylestern aus Polykieselsäure/Tetrahydrofuran-Extrakten.

EP 0 407 867 A2

EP 0 407 867 A2

## VERFAHREN ZUR HERSTELLUNG VON POLYKIESELSÄURE-C$_{6-22}$-ALKYLESTERN

Die Erfindung betrifft ein Verfahren zur Herstellung von Polykieselsäurealkylestern durch Umsetzung von Polykieselsäure/Tetrahydrofuran-Extrakten mit C$_{6-22}$-Alkylalkoholen.

Ortho- und Polykieselsäureester sind Verbindungen, in denen die Kohlenstoffatome organischer Gruppen über Sauerstoffbrücken mit Siliciumatomen verknüpft sind. Durch Variation der organischen Reste und des Vernetzungsgrades des Kieselsäureskeletts lassen sich Kieselsäureester mit nahezu beliebigen chemischen und anwendungstechnischen Eigenschaften herstellen.

Kieselsäureester, insbesondere Orthokieselsäureester sind beispielsweise durch Umsetzung von Chlorsilanen mit Alkoholen zugänglich (Winnacker-Küchler: "Chemische Technologie" 4. Auflage, Band 3, Seiten 93 bis 95, Carl Hanser Verlag, München/Wien 1983). Diese Herstellungsmethode erfordert jedoch einerseits eine aufwendige Technologie während der Chlorsilanherstellung, andererseits bildet sich bei der Veresterung Chlorwasserstoff, der durch aufwendige Adsorptionsverfahren beseitigt und/oder in den Produktionsprozeß zurückgeführt werden muß.

Eine weitere Methode zur Herstellung von Kieselsäurestern geht von Wasserglaslösungen aus (R. K. Iler, P. S. Pinkney in Industrial and Engineering Chemistry 39 , 1379 (1947)). Beim Ansäuern der Wasserglaslösungen bilden sich aus den Silikatanionen die freien Kieselsäuren. Aus den primär vorliegenden niedermolekularen und nicht isolierbaren Kieselsäuren entstehen durch Kondensation Polykieselsäuren, die ihrerseits zu sphärischen Kieselsäurepartikeln polymerisieren.

Da sich Polykieselsäuren nicht in wäßriger Lösung mit Alkoholen verestern lassen (US 3 351 561), müssen Polykieselsäuren vor der Veresterung aus der wäßrigen Lösung in ein geeignetes organisches Lösungsmittel transferiert werden. Diese Lösungsmittel müssen wasserlöslich oder mit Wasser mischbar und durch Elektrolytzusatz wieder aussalzbar sein. In den US-Patentschriften 2 383 653, 2 408 654 und 2 395 880 werden als Extraktionsmittel Alkohole, beispielsweise n-Propanol, i-Propanol, i-Butanol, t-Butanol und i-Pentanol; Ether, beispielsweise Polyethylenglykole; Ketone, beispielsweise Aceton; Amide, beispielsweise N-Isobutylacetamid; Amine; Phosphorsäureester, beispielsweise Triethyl- und tributylphosphat sowie Phosphite, beispielsweise Tributylphosphit genannt. Die Extraktionsraten der aufgeführten Extraktionsmittel sowie die maximal erzielbare SiO$_2$-Konzentration in den Extraktionsmitteln sind sehr unterschiedlich. So können beispielsweise bei Verwendung von n-Propanol, i-Propanol und t-Butanol Extraktionsraten von etwa 70 % erzielt werden, wobei der SiO$_2$-Gehalt in den Extrakten bei maximal 20 Gew.-% liegt. Es tritt jedoch bereits innerhalb kurzer fit Gelbildung ein. Bei der Zugabe von C$_{6-22}$-Alkylalkoholen zu polykieselsäure/Propanol- und Polykieselsäure/Butanol-Extrakten sowie während der Veresterung bilden sich Ausfällungen unlöslicher hochpolymerer Kieselsäuren. Die genannten Lösungsmittel Propanol und Butanol stabilisieren daher die extrahierten Polykieselsäuren nur wenig gegen die in Konkurrenz zur Veresterung ablaufende Selbstkondensation der Silanolgruppen. Mit Polyethylenglykolen und Polypropylenglykolen als Extraktionsmittel werden Extraktionsraten bis zu 100 erreicht, wobei der SiO$_2$-Gehalt der Polykieselsäureextrakte bis zu 30 Gew.-% betragen kann. Die erhaltenen Extrakte polymerisieren jedoch innerhalb weniger Stunden zu hochviskosen, zum Teil gummiartigen Produkten, die während der anschließenden Veresterung zu unlöslichen Polymeren erstarren.

Während der Umsetzung der extrahierten Polykieselsäuren mit Alkoholen zu den entsprechenden Polykieselsäureestern muß das gebildete Reaktionswasser durch beispielsweise azeotrope Destillation oder durch Zusatz wasserbindender Mittel aus dem Reaktionsgemisch entfernt werden. Bei dem in Industrial and Engineering Chemistry 39 , 1379 (1947) beschriebenen Verfahren wird mit t-Butanol extrahierte Polykieselsäure unter genauer Kontrolle von Druck und Reaktionstemperatur sowie Einhaltung einer bestimmten SiO$_2$-Konzentration mit n-Butanol verestert. Dieses Verfahren ist umständlich, führt in vielen Fällen zu unbrauchbaren polymeren Produkten und ist nur auf aliphatische Alkohole mit maximal 5 Kohlenstoffatomen anwendbar.

In Journal of Polymer Science, Polymer Chemistry Edition 22 , 3759 (1984) wird die Veresterung von Kieselsäure/Tetrahydrofuran-Lösungen mit Methanol, Ethanol, Isopropanol, n-Butanol, t-Butanol und Octanol in einer Veresterungsapparatur mit zwei Kolben beschrieben. Zunächst wird aus dem sich im Reaktionskolben befindenden Gemisch aus Kieselsäure/Tetrahydrofuran-Lösung und Alkohol Tetrahydrofuran mittels Destillation entfernt. Anschließend wird die Veresterung bei Temperaturen von 63 °C und höher durchgeführt, wobei das entstehende Alkohol/Wasser-Azeotrop in den zweiten Kolben zur Trocknung geleitet wird. Um das Volumen der Reaktionsmischung konstant zu halten, wird gleichzeitig getrockneter Alkohol aus dem zweiten Kolben wieder der Reaktionsmischung zugeführt.

In US 2 801 185 wird die Veresterung der aus einem Kieselsäuresol mit Propanol extrahierten Kieselsäurepartikel mit einem verzweigten Octadecylalkohol beschrieben. Das erhaltene Produkt ist eine

2

feste, nicht schmelzbare, hochmolekulare hydrophobierte Polykieselsäure.

Die Aufgabe der vorliegenden Erfindung bestand darin, ein Verfahren zur Herstellung von Polykieselsäurealkylestern zu entwickeln, mit dem längerkettige Alkylalkohole, d. h. Alkylalkohole mit 6 und mehr C-Atomen mit Polykieselsäuren in einfacher Weise verestert werden können. Die entstehenden Polykieselsäurealkylester sollen niedermolekular sein und sich in organischen Lösungsmitteln, beispielsweise Alkylalkoholen, vollständig lösen.

Überraschenderweise werden die an das zu entwickelnde Verfahren gestellten hohen Anforderungen erfüllt, wenn Polykieselsäure/Tetrahydrofuran-Extrakte mit bestimmten $SiO_2$-Gehalten mit $C_{6-22}$-Alkylalko-holen unter Einhaltung bestimmter Molverhältnisse von Alkylalkoholen : $SiO_2$ verestert werden, indem Tetrahydrofuran gegen Toluol ausgetauscht und anschließend bei Temperaturen zwischen 85 und 120 °C gebildetes Reaktionswasser destillativ entfernt wird.

Gegenstand der Erfindung ist dementsprechend ein Verfahren zur Herstellung von Polykieselsäurealkylestern durch Umsetzung von Polykieselsäure/Tetrahydrofuran-Extrakten mit Alkylalkoholen, welches dadurch gekennzeichnet ist, daß man

a) Polykieselsäure/Tetrahydrofuran-Extrakte mit $SiO_2$-Gehalten zwischen 2 und 50 Gew.-% mit $C_{6-22}$-Alkylalkoholen in solchen Mengen mischt, daß das Molverhältnis Alkylalkohole : $SiO_2$ zwischen 10 : 1 und 1,5 : 1 liegt,

b) anschließend Tetrahydrofuran bei Temperaturen zwischen 40 und 45 °C und Drücken zwischen 1 • $10^4$ und 3 • $10^4$ Pa mittels Destillation entfernt und durch Toluol volumengleich ersetzt und

c) die Veresterung bei Temperaturen zwischen 85 und 120 °C durchführt, mit der Maßgabe, daß das während der Veresterung gebildete Wasser kontinuierlich als Toluol/Wasser-Azeotrop destillativ entfernt wird.

Im Gegensatz zu den vielen, aus dem Stand der Technik bekannten Verfahren zur Herstellung von Polykieselsäurealkylestern tritt bei dem erfindungsgemäßen Verfahren neben der Veresterung die Selbstkondensation der Silanolgruppen und damit die Polymerisation der Kieselsäuren nur in untergeordnetem Maße auf. Unter Einhaltung eines Molverhältnisses Alkylalkohole : $SiO_2$ zwischen 10 : 1 und 1,5 : 1 bilden sich Polykieselsäurealkylester, die sich in organischen Lösungsmitteln und insbesondere in $C_{6-22}$-Alkyl-alkoholen hervorragend lösen. Werden Polykieselsäure/Tetrahydrofuran-Extrakte mit Alkylalkoholen in solchen Mengen gemischt, daß das Molverhältnis Alkylalkohole : $SiO_2$ unterhalb 1,5 : 1 liegt, so bilden sich ausschließlich hochvernetzte, in $C_{6-22}$-Alkylalkoholen unlösliche Polykieselsäurealkylester.

Das erfindungsgemäße Verfahren erfordert keine komplizierte Reaktionsführung, wie beispielsweise bei dem in Journal of Polymer Soience, Polymer Chemistry Edition 22 3759 (1984) beschriebenen Verfahren. Im Vergleich zu bekannten Verfahren sind die Reaktionszeiten deutlich kürzer.

Die für das erfindungsgemäße Verfahren als Edukte einzusetzenden Polykieselsäure/Tetrahydrofuran-Extrakte lassen sich in bekannter Weise herstellen, indem Alkaliwassergläser, wasserfreie und/oder wasserhaltige Metasilikate und/oder Schichtsilikate, beispielsweise Glimmer und/oder Smectite, zu Mineralsäuren, beispielsweise Schwefelsäure, Salzsäure, Phosphorsäure und/oder Salpetersäure gegeben werden. Vorzugsweise werden handelsübliche wäßrige Natron- und/oder Kaliwasserglaslösungen mit Molverhältnissen Siliciumdioxid : Alkalioxid im Bereich zwischen 1 und 4 eingesetzt. Besonders reaktive Polykieselsäuren werden erhalten, wenn der $SiO_2$-Gehalt der Wasserglaslösungen vor dem Ansäuern unterhalb 15 Gew.-%, vorzugsweise unterhalb 12 Gew.-% liegt. Die Wasserglaslösungen werden Mineralsäuren in solchen Mengen zugesetzt,daß der pH-Wert immer zwischen 1 und 4, vorzugsweise zwischen 1 und 3,5 und besonders bevorzugt zwischen 1,5 und 2,5 liegt. Dabei bilden sich wasserklare Polykieselsäurelösungen, die bei den genannten pH-Werten erst nach etwa 20 Stunden zu Gelen erstarren.

Um die Polykieselsäuren aus der wäßrigen Phase in die organische Phase zu transferieren, werden die wäßrigen Polykieselsäurelösungen mit Tetrahydrofuran versetzt und mit Alkalihalogeniden, beispielsweise Natriumchlorid gesättigt, wobei vorzugsweise zuerst Tetrahydrofuran und anschließend Alkalihalogenide zugegeben werden. Die für eine möglichst vollständige Extraktion erforderliche Tetrahydrofuranmenge bemißt sich nach der Polykieselsäuremenge -angegeben als $SiO_2$-Gehalt -, die aus der Polykieselsäurelösung extrahiert werden soll und der maximal möglichen Beladung des Tetrahydrofurans mit Polykieselsäure. Wenn die Extraktion der Polykieselsäure bei pH-Werten zwischen 1 und 4 durchgeführt wird, können 60 bis 95 % der in der wäßrigen Polykieselsäurelösung vorliegenden $SiO_2$-Menge in einem einzigen Extraktionsschritt in die organische Phase transferiert werden. Der Extraktionsgrad wird nach der Bestimmung der in der wäßrigen Phase verbliebenen $SiO_2$-Menge rechnerisch ermittelt. Die Kieselsäureextraktion wird bei Temperaturen zwischen 4 und 30 °C, vorzugsweise zwischen 15 und 30 °C und besonders bevorzugt zwischen 15 und 25 °C durchgeführt. Vor der Veresterung der Polykieselsäuren werden die Polykieselsäure/Tetrahydrofuran-Extrakte mit geglühtem Natriumsulfat, Magnesiumsulfat und/oder Calciumchlorid getrocknet.

Für das erfindungsgemäße Verfahren eignen sich Polykieselsäure/Tetrahydrofuran-Extrakte mit $SiO_2$-Gehalten zwischen 2 und 50 Gew.-%, und insbesondere Extrakte mit $SiO_2$-Gehalten zwischen 4 und 20 Gew.-%. Der Wassergehalt der Polykieselsäure/Tetrahydrofuran-Extrakte liegt vorzugsweise zwischen 5 und 20 Gew.-%. Besonders bevorzugt werden Polykieselsäure/Tetrahydrofuran-Extrakte eingesetzt, die Polykieselsäuren enthalten, deren Molmassenbereich sich nach 24 Stunden bei 25 °C von 500 bis 50 000 erstreckt (Gel-Permeationschromatographie: Ultrastyragelsäule mit Polystyrolstandards geeicht, Dedektor: 410 32X RI der Firma Waters, Eluationsmittel: Tetrahydrofuran).

Die getrockneten Polykieselsäure/Tetrahydrofuran-Extrakte werden bei Temperaturen zwischen 10 und 30 °C mit $C_{6-22}$-Alkylalkoholen in solchen Mengen gemischt, daß das Molverhältnis Alkylalkohole : $SiO_2$ zwischen 10 : 1 und 1,5 : 1, vorzugsweise zwischen 9 : 1 und 2 : 1 liegt. Anschließend wird Tetrahydrofuran bei 40 bis 45 °C bei Drücken zwischen $1 \cdot 10^4$ und $3 \cdot 10^4$ Pa abdestilliert und durch Toluol volumengleich ersetzt. Die Veresterungsreaktion wird bei Temperaturen zwischen 85 und 120 °C unter Normaldruck durchgeführt. Das während der Veresterung gebildete Wasser wird als Wasser/Toluol-Azeotrop aus dem Reaktionsmedium ausgeschleust und in einem Wasserabscheider gesammelt. In Abhängigkeit von den Mengen der eingesetzten Polykieselsäure/Tetrahydrofuran-Extrakte und Alkylalkohole liegt die Reaktionszeit der Veresterung zwischen 2 und 5 Stunden. Um eine möglichst vollständige Veresterung der vorhandenen Silanolgruppen zu erzielen, kann es in vielen Fällen vorteilhaft sein, nach einem Viertel bis einem Drittel der gesamten Veresterungszeit das während der Veresterung gebildete Wasser als Toluol/Wasser-Azeotrop über Molekularsiebe zu leiten und das getrocknete Toluol dem Reaktionsgemisch wieder zuzuführen. In diesen Fällen wird der Wasserabscheider gegen einen Soxhlet-Aufsatz, der mit Molekularsieben gefüllt ist, ausgetauscht. Nach beendeter Veresterung werden Toluol und überschüssige Alkylalkohole, vorzugsweise unter vermindertem Druck, destillativ entfernt. Die erhaltenen Polykieselsäurealkylester zeichnen sich durch hohe Lagerstabilitäten aus. Der mit Hilfe der Gel-Permeationschromatographie ermittelte Molmassenbereich der nach dem erfindungsgemäßen Verfahren herstellbaren Polykieselsäurealkylester liegt zwischen $10^2$ und $10^8$, vorzugsweise zwischen $10^{2,5}$ und $10^7$.

Zur Veresterung von Polykieselsäuren eignen sich geradkettige und/oder verweigtkettige $C_{6-22}$-Alkylalkohole natürlichen und/oder synthetischen Ursprungs, beispielsweise Hexanol-1, Heptanol-1, Octanol-1, 2-Ethyl-hexanol-1, Decanol-1, Undecanol-1, Dodecanol-1, Tetradecanol-1, Hexadecanol-1, Octadecanol-1, Eicosanol-1 und/oder Docosanol-1, ferner technische, geradkettige Alkoholgemische mit beispielsweise überwiegend $C_{10-14}$-Alkylalkoholen und/oder $C_{12-14}$-Alkylalkoholen. Geringe Anteile ungesättigter Alkohole in technischen Alkoholgemischen haben keinen störenden Einfluß auf die Veresterung von Polykieselsäuren. Vorzugsweise werden geradkettige $C_{6-14}$-Alkylalkohole oder geradkettige $C_{6-14}$-Alkylalkoholgemische natürlichen Ursprungs eingesetzt.

Beispiele

1. Herstellung von Polykieselsäure/Tetrahydrofuran-Extrakten

777 g Natronwasserglaslösung (27,9 Gew.-% $SiO_2$ und 8,29 Gew.-% $Na_2O$; Gewichtsverhältnis $SiO_2$ $Na_2O$ = 3,37; Molverhältnis $SiO_2$ : $Na_2O$ = 3,47) wurden mit 1138 g Wasser verdünnt und zu 1710 g einer 7,35 gew.-%igen wäßrigen Schwefelsäurelösung gegeben. In dieser Lösung wurden 3420 ml (3040 g) Tetrahydrofuran und anschließend 1200 g Natriumchlorid gelöst. Nach einstündigem Rühren bei 18 °C wurde die wäßrige Phase von der tetrahydrofuranhaltigen Phase in einem Scheidetrichter abgetrennt. Der erhaltene Polykieselsäure/Tetrahydrofuran-Extrakt wurde anschließend über geglühtem Natriumsulfat getrocknet. Es wurden 3700 ml Polykieselsäure/Tetrahydrofuran-Extrakt mit einem $SiO_2$-Gehalt von 5,3 Gew.-% und einem Wassergehalt von 8 Gew.-% erhalten. Der Extraktionsgrad betrug 97 %. Der Molmassenbereich, bestimmt durch Gel-Permeationschromatographie (Säule: Ultrastyragel, geeicht mit Polystyrolstandards, Dedektor:410 32X RI der Firma Waters, Eluationsmittel : Tetrahydrofuran), erstreckte sich nach 24 Stunden bei 25 °C von 500 bis 20 000 .

2. Herstellung von Polykieselsäurealkylestern

Polykieselsäure/Tetrahydrofuran-Extrakt hergestellt gemäß Beispiel 1 wurde bei 18 °C mit der gleichen Volumenmenge Alkylalkohol versetzt. Anschließend wurde Tetrahydrofuran bei 40 bis 45 °C /$1 \cdot 10^4$ bis 3 $\cdot 10^4$ Pa am Rotavapor abgezogen und durch Toluol volumengleich ersetzt. Anschließend wurde das Reaktionsgemisch auf 120 °C erhitzt und das während der Veresterung entstehende Reaktionswasser azeotrop zwischen 85 °C und 120 °C abdestilliert. Die Veresterungsreaktionen waren nach 5 Stunden beendet. Toluol wurde am Rotavapor bei 80 bis 100 °C / 1,5 $\cdot$ 10$^4$ bis 3 $\cdot$ 10$^4$ Pa und anschließend überschüssiger Alkylalkohol im Wasserstrahl- (Hexanol) bzw. im Ölpumpenvakuum (Octanol bis Tetradecanol) mittels Destillation entfernt. Die Reaktionsbedingungen sowie die Charakterisierung der erhaltenen Polykieselsäurealkylester sind in Tabelle 1 zusammengefaßt. Der Molmassenbereich wurde mittels Gel-Permeationschromatographie (Bedingungen gemäß Beispiel 1) bestimmt.

Tabelle 1

| PKS/THF-Etrakt[1] | | Alkylalkohol | | Molverhältnis Alkylalkohol : SiO$_2$ | PKS - Alkylester | | |
|---|---|---|---|---|---|---|---|
| ml | SiO$_2$-Menge in mol | Typ | mol | | SiO$_2$-Gehalt in Gew.-% | Molmassenbereicch | Konsistenz bei 20 °C |
| 400 | 0,38 | Hexanol | 3,23 | 8,5 | 38,9 | 10$^3$-10$^6$ | dünnflüssig |
| 365 | 0,35 | Octanol | 2,27 | 6,5 | 41,3 | 10$^{2,7}$-10$^{5,2}$ | zähflüssig |
| 400 | 0,38 | Decanol | 2,09 | 5,5 | 32,3 | 10$^{2,6}$-10$^{4,8}$ | dünnflüssig |
| 340 | 0,32 | Dodecanol | 1,49 | 4,7 | 25,7 | 10$^{3,1}$-10$^{5,3}$ | dünnflüssig |
| 340 | 0,32 | Tetradecanol | 1,27 | 3,7 | 26,0 | 10$^3$-10$^6$ | dickflüssig |

[1] PKS/THF-Extrakt = Polykieselsäure/Tetrahydrofuran-Extrakt

## Ansprüche

1. Verfahren zur Herstellung von Polykieselsäurealkylestern durch Umsetzung von Polykieselsäure/Tetrahydrofuran-Extrakten mit Alkylalkoholen, dadurch gekennzeichnet, daß man

a) Polykieselsäure/Tetrahydrofuran-Extrakte mit SiO$_2$-Gehalten zwischen 2 und 50 Gew.-% mit C$_{6-22}$-Alkylalkoholen in solchen Mengen mischt, daß das Molverhältnis Alkylalkohole : SiO$_2$ zwischen 10 : 1 und 1,5 : 1 liegt,

b) anschließend Tetrahydrofuran bei Temperaturen zwischen 40 und 45 °C und Drücken zwischen 1 $\cdot$ 10$^4$ und 3 $\cdot$ 10$^4$ Pa mittels Destillation entfernt und durch Toluol volumengleich ersetzt und

c) die Veresterung bei Temperaturen zwischen 85 und 120 °C durchführt mit der Maßgabe, daß das während der Veresterung gebildete Wasser kontinuierlich mittels azeotroper Destillation entfernt wird.

2. Verfahren nach Anspruch 1, dadurch gekennzeichnet, daß man Polykieselsäure/Tetrahydrofuran-Extrakte mit SiO$_2$-Gehalten zwischen 4 und 20 Gew.-% und Wassergehalten zwischen 5 und 20 Gew.-% einsetzt.

3. Verfahren nach einem oder beiden der Ansprüche 1 bis 2, dadurch gekennzeichnet, daß man Polykieselsäure/Tetrahydrofuran-Extrakte einsetzt, die Polykieselsäuren enthalten, deren Molmassenbereiche sich nach 24 Stunden bei 25 °C von 500 bis 50 000 erstrecken.

4. Verfahren nach einem oder mehreren der Ansprüche 1 bis 3, dadurch gekennzeichnet, daß das Molverhältnis Alkylalkohole : SiO$_2$ zwischen 9 : 1 und 2 : 1 liegt.

5. Verfahren nach einem oder mehreren der Ansprüche 1 bis 4, dadurch gekennzeichnet, daß man geradkettige C$_{6-14}$-Alkylalkohole einsetzt.

6. Verfahren nach einem oder mehreren der Ansprüche 1 bis 5, dadurch gekennzeichnet, daß man nach einem Viertel bis einem Drittel der gesamten Veresterungszeit das während der Veresterung gebildete Wasser als Toluol/Wasser-Azeotrop über Molekularsiebe leitet und das getrocknete Toluol dem Reaktionsgemisch wieder zuführt.